# NEUE EUROPÄISCHE PATENTSCHRIFT

(11) **EP 1 560 097 B2**
(45) Veröffentlichungstag und Bekanntmachung des Hinweises auf die Entscheidung über den Einspruch: **02.03.2016**
(45) Hinweis auf die Patenterteilung: 24.10.2012
(21) Anmeldenummer: 04028087.7
(22) Anmeldetag: 26.11.2004
(51) Int. Cl.: F28F 27/02, F16H 57/04

(54) **Thermostat-Regelventil mit Gehäuse an einem Wärmeüberträger**
Thermostatic control valve with a housing attached to a heat exchanger
Clapet de contrôle thermostatique avec un boîtier fixé sur un échangeur de chaleur

(30) Priorität: 28.01.2004 DE 102004004223
(43) Veröffentlichungstag der Anmeldung: 03.08.2005
(73) Patentinhaber: Modine Manufacturing Company, Racine, Wisconsin 53403-2552 (US)
(72) Erfinder: Kalbacher, Klaus, Dipl.-Ing., 72414 Rangendingen (DE); Bräuning, Thomas, Dipl.-Ing., 70186 Stuttgart (DE)
(74) Vertreter: Wolter, Klaus-Dietrich

(56) Entgegenhaltungen:
- EP-A- 0 787 929
- EP-A- 0 916 816
- EP-A2- 0 623 798
- DE-A1- 10 019 029
- US-A- 5 575 329
- US-B1- 6 499 666

## Beschreibung

Die Erfindung betrifft ein Thermostat - Regelventil mit einem Gehäuse, das an einer Wand eines Wärmeübertragers befestigt ist und das die weiteren Merkmale des Oberbegriffs des Anspruchs 1 aufweist.

Dieses Regelventile ergibt sich aus.der DE 100 19 029 A1.

Ein Regelventil, mit dem unterschiedliche Temperaturen aufweisende Kühlflüssigkeitsströme zur Temperierung von Getriebeöl regelbar sind, ist ferner aus dem EP 787 929 B1 oder aus dem EP 829 795 B1 bekannt. In dem erstgenannten Dokument wurde lediglich die regelungstechnische Seite angesprochen, jedoch nicht deren Umsetzung in ein Produkt gezeigt. In dem zweiten Dokument ist das Thermostat - Regelventil nicht in körperlicher Verbindung mit einem Wärmeübertrager sondern teilweise in einem Ausgleichsbehälter der Kühlanlage des Kraftfahrzeuges integriert worden.

Obwohl mit dem Thermostat - Regelventil aus der DE'029 A1 eine möglichst wenig Bauraum beanspruchende Lösung beabsichtigt ist, scheint eine weitere Reduzierung dessen Bauraums möglich zu sein. Das bekannte Regelventilgehäuse ist zwar auch ziemlich flach gebaut, es besitzt aber eine sich etwa über die gesamte Wand des Wärmeübertragers erstreckende Ausdehnung, weil es außer dem Wasser-Zuführkanal auch einen Ölabführkanal umschließt, wobei beide Kanäle in der Regel in diametralen Ecken des Wärmeübertragers angeordnet sind.

Im EP 916 816A1 wird die Menge der Kühlflüssigkeit in Abhängigkeit von der Öltemperatur geregelt.

Die Aufgabe der Erfindung besteht darin, das Thermostat - Regelventil aus dem Oberbegriff derart weiterzubilden, dass eine Temperierung durchführbar ist, ohne dass das Regelventilgehäuse einen Ölkanal umfassen muss. Dadurch soll eine weitere Reduzierung von dessen Baugröße erzielt werden.

Die erfindungsgemäße Lösung erfolgt durch die Merkmale im Kennzeichen des Anspruchs 1.

Es ist vorgesehen, die Wand des Wärmeübertragers mit wenigstens einem Durchbruch zu versehen, der eine hydraulische Verbindung zwischen wenigstens einem Strömungskanal und dem Thermostat - Regelventil zur Verfügung stellt, so dass das im Strömungskanal strömende Öl mit dem Thermostat in Kontakt kommt. Da der Durchbruch an einer frei wählbaren Stelle der Wand, also unabhängig von der Position der Kanäle des Wärmeübertragers vorgesehen werden kann, ist es möglich, die Baugröße des Regelventils weiter zu reduzieren. Das im Wärmeübertrager strömende Öl ist das zu temperierende Medium, worunter verstanden wird, dass dessen Temperatur in manchen Betriebssituationen angehoben wird oder in anderen Betriebssituationen abgesenkt werden muss, so dass es in allen Betriebssituationen eine möglichst optimale Temperatur aufweist, die durch entsprechende Einstellung der Temperatur des anderen Mediums, vorzugsweise eines flüssigen Mediums, erreicht wird.

In dem Durchbruch der Wand ist ein Strömungslenkelement vorhanden, um den Kontakt des Öls mit dem Thermostat zu intensivieren.

Es ist aus fertigungstechnischer Sicht vorteilhaft, wenn das Strömungslenkelement ein umformtechnisch hergestellter schrägstehender Flügel ist, der ein Teil der Wand darstellt, denn dieser Flügel kann bei der Herstellung der Wand ausgebildet werden und muss demzufolge nicht später montiert werden.

Dadurch wird jedoch nicht ausgeschlossen, dass das Strömungslenkelement auch ein Einzelteil sein könnte, das im Durchbruch der Wand eingefügt und befestigt ist.

Das Gehäuse des Thermostat - Regelventils weist eine Abteilung auf, in die der Thermostat hineinragt und in der das Öl mit dem Thermostat in Kontakt ist.

Daran anschließend besitzt das Gehäuse eine Kammer, die einen Anschluss für niedrig temperiertes Wasser und einen anderen Anschluss für höher temperiertes Wasser besitzt, wobei die Kammer mit dem Wasser - Zuführkanal des Wärmeübertragers hydraulisch verbunden ist und wobei, je nach Stellung des Regelventils, entweder nur niedrig oder nur höher temperiertes Wasser, oder ein Mischstrom aus niedrig und höher temperiertem Wasser über die Kammer in den Zuführkanal strömt.

In dieser Kammer erstrecken sich an sich bekannte Elemente des Regelventils, bestehend beispielsweise aus einem Ventilstößel, einem Ventilteller und einer Ventilfeder. Es wird mittels Dichtungen dafür Sorge getragen, dass das in der Abteilung befindliche Öl nicht mit dem in der Kammer vorhandenen Wasser in Verbindung kommt.

Die Wand besitzt eine Wölbung in der sich der Durchbruch befindet.

Es ist außerdem von Vorteil, wenn die Wand den Umfang des Wärmeübertragers überragt und im überragende Bereich Mittel zur vorzugsweise elastischen Befestigung des Wärmeübertragers aufweist. Auch diese Mittel können bei der Herstellung der Wand mit ausgebildet werden.

Die Erfindung ist nachfolgend in einem Ausführungsbeispiel beschrieben, wozu auf die beiliegenden Abbildungen verwiesen wird. Wesentliche Merkmale und Wirkungen der angemeldeten Lösung können sich auch in dieser Beschreibung befinden.
Fig. 1 Ansicht von der Seite in das Innere des Thermostat - Regelventils;
Fig. 2 ähnlich Fig. 1, mit einer Perspektive;
Fig. 3 Einzelheit aus Fig. 1 oder 2;

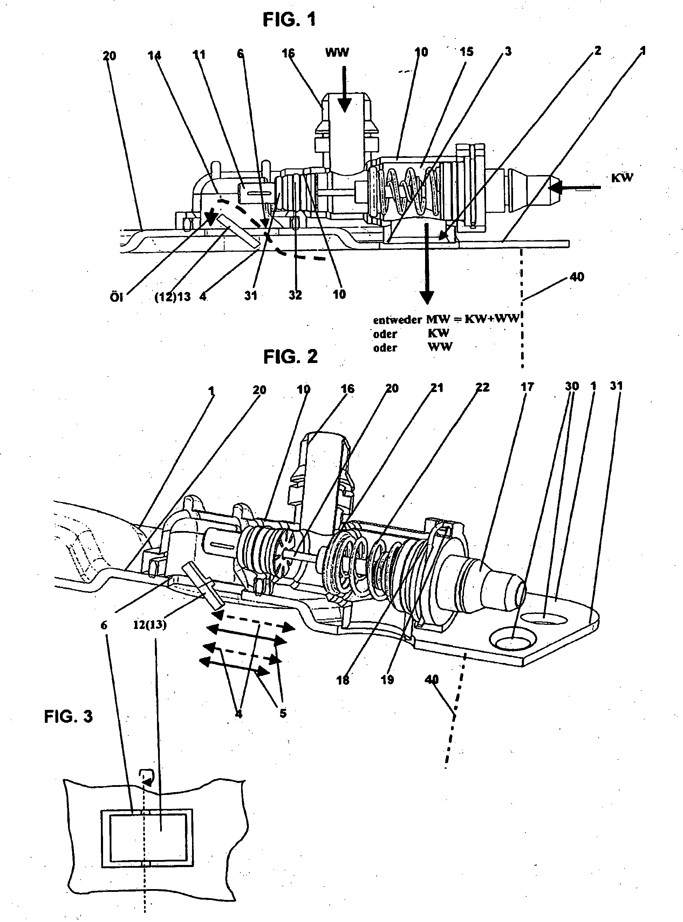

Im gezeigten Ausführungsbeispiel befindet sich das Thermostat - Regelventil auf der Deckplatte eines gehäuselosen Plattenwärmeübertragers, der als Getriebeölkühler in einem Kraftfahrzeug eingesetzt ist. Die Deckplatte stellt die Wand **1** dar. Sie hat einen Überstand **31** über den Rand des Plattenwärmeübertragers, in dem Mittel zur Befestigung desselben vorgesehen sind. Der Rand des Plattenwärmeübertragers wurde lediglich als vertikale Linie **40** angedeutet. Im Ausführungsbeispiel sind zwei Öffnungen **30** zu sehen. Die Befestigung erfolgt vorzugsweise mittels einer elastischen Unterlage. (Dämpfungsbuchsen - nicht gezeigt) Das Regelventil befindet sich in einem Gehäuse **10.** Im Ausführungsbeispiel wurde das Regelventil im Bereich des rechten Anschlusses **17** eingesetzt und ist mit Hilfe einer Feder **18** im Gehäuseflansch **19** abdichtend befestigt. Das Gehäuse **10** hat eine Abteilung **14** und eine Kammer **15**. Es ist auf der Wand **1** befestigt und auch dort entsprechend abgedichtet. Die Strömungskanäle **4** für das Öl und **5** für die Kühlmittel wurden in der Fig. 2 durch Pfeile angedeutet. Die Medien könnten im Gegenstrom oder im Gleichstrom durch die Strömungskanäle **4** und **5** strömen. Deshalb wurden Doppelpfeile eingezeichnet. In der Abteilung **14** befindet sich Getriebeöl und in der Kammer **15** ist als Kühlmittel die Kühlflüssigkeit des Kraftfahrzeugs vorhanden. Das Getriebeöl gelangt über den Durchbruch **6** in der Wand **1** aus dem Strömungskanal **4** in die Abteilung **14** hinein. Bei dem Strömungskanal **4** kann es sich entweder um im Inneren des Plattenwärmeübertragers angeordnete Strömungskanäle **4** handeln oder, wie gezeigt, um einen Strömungskanal, der in der Wand **1** ausgebildet ist, und der hier als Überführkanal dient, um das Öl zu einem (nicht gezeigten) Anschlussstutzen zu überführen. Die Wand **1** besitzt eine Wölbung **20**, die nach oben ausgebildet ist. In dem Durchbruch **6** befindet sich ein Flügel **13,** der dazu beiträgt, dass der Kontakt des Getriebeöls mit dem Thermostat **11** verbessert wird, denn er stellt ein Strömungslenkelement **12** dar und leitet einen Teil des Getriebeöls über die Abteilung **14.** Der Flügel **13** wurde in Form einer nur teilweise ausgestanzten und mit einem Anstellwinkel verdrehten Lasche ausgeführt. Die Skizze in Fig. 3 zeigt eine Draufsicht auf den Durchbruch **6**, die gemeinsam mit Fig. 2 diesen Sachverhalt verständlich macht. In der Fig. 1 wurde ein gestrichelter Pfeil eingezeichnet, der zeigen soll, wie das Öl in die Abteilung **14** gelangt. Die Abteilung **14** ist von der Kammer **15** hydraulisch getrennt. Im Ausführungsbeispiel sorgen zwei Dichtringe **31, 32**, die zwischen dem Thermostatkörper **11** und dem Gehäuse **10** angeordnet sind, für die erwähnte Trennung. Der Thermostat **11** ragt in die Abteilung **14** hinein und ist somit in Kontakt mit dem Getriebeöl. Die Ventilstange **20** erstreckt sich in der Kammer **15**. Weiter ist ein Ventilteller **21** vorgesehen und eine Ventilfeder **22**, die von der Gegenseite auf den Ventilteller **21** einwirken und die Ventilstange 20 mit dem Ventilteller **21** zurückschieben kann. An der Kammer **15** befinden sich zwei Anschlüsse, wobei der obere Anschluss **16** für vorgewärmte Kühlflüssigkeit **WW** vorgesehen ist, und der rechte Anschluss **17** ist dementsprechend für gekühlte Kühlflüssigkeit **KW** gedacht. In den Fig. 1 und 2 ist lediglich der Fall abgebildet, in dem gekühlte Kühlflüssigkeit **KW** in den Zuströmkanal **2** des Plattenwärmeübertragers strömen kann, um das Getriebeöl zu kühlen. Das Getriebeöl besitzt in diesem Fall eine oberhalb des Temperaturoptimums liegende Temperatur und muss deshalb gekühlt werden.

Beispielsweise in der Startphase des Kraftfahrzeugs wird die Temperatur des Getriebeöls unterhalb des Optimums liegen. In diesem Fall wird der Thermostat **10** die Ventilstange **20** nach rechts bewegen und die Ventilfeder **22** zusammendrücken.

Dadurch wird der Zugang über den Anschluss **17** geschlossen und der Zugang über den Anschluss **16** entsprechend geöffnet, so dass vorgewärmte Kühlflüssigkeit **WW** in den Plattenwärmeübertrager strömen wird, um das Getriebeöl schnell auf die optimale Temperatur anzuwärmen. Aus den beiden Figuren ist ersichtlich, dass die Regelung stufenlos erfolgt und durch Mischung von kühlerer mit wärmerer Kühlflüssigkeit **MW** innerhalb des Regelbereiches eine gewünschte Kühlflüssigkeitstemperatur einstellbar ist, mittels der eine optimale Temperatur des Getriebeöles zur Verfügung gestellt werden kann.

Der Wärmeübertrager besitzt selbstverständlich wenigstens einen Zuführkanal für das Öl und entsprechende Abführkanäle für Öl und Kühlflüssigkeit, die in den Figuren nicht abgebildet sind, weil sie dem Stand der Technik entsprechen.

Insgesamt ist die vorgeschlagene Lösung darüber hinaus wesentlich kostengünstiger realisierbar als die Lösungen des Standes der Technik, bei denen der Thermostat **11** in einem der Zu -oder Abführkanäle angeordnet ist.

## Patentansprüche

1. Thermostat - Regelventil mit einem Gehäuse (10), das an einer Wand (1) eines Wärmeübertragers, beispielsweise eines Öl/Wasser - Wärmeübertragers, befestigt ist, um ein Medium (beispielsweise Öl) zu temperieren, wobei es mit einem Zuführkanal (2) des anderen Mediums (beispielsweise Kühlflüssigkeit) über eine Öffnung (3) in der Wand (1) des Wärmeübertragers kooperiert, wobei die Temperatur des zu temperierenden Mediums für die Regelung der Temperatur des in den Wärmeübertrager einströmenden anderen Mediums, innerhalb eines bestimmten Regelbereiches, dient, wobei der Wärmeübertrager getrennte Strömungskanäle (4, 5) für das zu temperierende Medium und für das andere Medium aufweist und wobei die Wand (1) weitere Öffnungen für Zu - und / oder Abführkanäle aufweist,
**dadurch gekennzeichnet, dass**
die Wand (1) des Wärmeübertragers an einer frei wählbaren Stelle, unabhängig von der Position der Kanäle, wenigstens einen Durchbruch (6) aufweist, über den eine hydraulische Verbindung zwischen einem Strömungskanal (4) und dem Thermostat - Regelventil zur Verfügung steht, so dass im Strömungskanal (4) strömendes, zu temperierendes Medium mit dem Thermostat (11) in Kontakt kommt, wobei die Wand (1) um den Durchbruch (6) herum eine Wölbung (20) aufweist.

2. Thermostat - Regelventil nach den Anspruch 1, **dadurch gekennzeichnet, dass** in dem Durchbruch (6) ein Strömungslenkelement (12) vorhanden ist.

3. Thermostat - Regelventil nach den Ansprüchen 1 und 2, **dadurch gekennzeichnet, dass** das Strömungslenkelement (12) ein umformtechnisch hergestellter schrägstehender Flügel (13) ist, der ein Teil der Wand (1) darstellt.

4. Thermostat - Regelventil nach den Ansprüchen 1 und 2, **dadurch gekennzeichnet, dass** das Strömungslenkelement (12) ein Einzelteil ist, das im Durchbruch (6) der Wand (1) eingefügt und befestigt ist.

5. Thermostat - Regelventil nach einem der vorstehenden Ansprüche, **dadurch gekennzeichnet, dass** das Gehäuse (10) eine Abteilung (14) aufweist, in die der Thermostat (11) hineinragt und in der das zu temperierende Medium mit dem Thermostat (11) in Kontakt ist.

6. Thermostat - Regelventil nach einem der vorstehenden Ansprüche, **dadurch gekennzeichnet, dass** das Gehäuse (10) eine Kammer (15) aufweist, die einen Anschluss (16) für kühleres anderes Medium und einen anderen Anschluss (17) für wärmeres anderes Medium besitzt, wobei die Kammer (15) mit dem Zuführkanal (2) des anderen Mediums des Wärmeübetragers hydraulisch verbunden ist und wobei, je nach Stellung des Regelventils, entweder nur kühleres oder nur wärmeres anderes Medium oder eine Mischstrom aus kühlerem und wärmerem anderem Medium über die Kammer (15) in den Zuführkanal (2) strömt.

7. Thermostat - Regelventil nach einem der vorstehenden Ansprüche, **dadurch gekennzeichnet, dass** die Wand (1) den Umfang des Wärmeübertragers überragt und im überragende Bereich Mittel (30) zur vorzugsweise elastischen Befestigung des Wärmeübertragers aufweist.

8. Thermostat - Regelventil nach einem der vorstehenden Ansprüche, **dadurch gekennzeichnet, dass** der Strömungskanal, der über den Durchbruch (6) in der Wand (1) hydraulisch mit der Gehäuseabteilung verbunden ist, vorzugsweise der der Wand (1) benachbarte Strömungskanal (4) ist.

## Claims

1. Thermostatic control valve with a housing (10) which is fastened to a wall (1) of a heat exchanger, for example of an oil/water heat exchanger, in order to control the temperature of a medium (for example, oil), the said housing cooperating with a supply duct (2) for the other medium (for example, cooling liquid) via an orifice (3) in the wall (1) of the heat exchanger, the temperature of the medium to be temperature-controlled serving for regulating the temperature of the other medium, flowing into the heat exchanger, within a specific control range, the heat exchanger having separate flow ducts (4, 5) for the medium to be temperature-controlled and for the other medium, and the wall (1) having further orifices for supply and/or discharge ducts, **characterized in that** the wall (1) of the heat exchanger has at a freely selectable location, independently of the position of the ducts, at least one perforation (6), via which a hydraulic connection between a flow duct (4) and the thermostatic control valve is available, so that medium to be temperature-controlled which flows in the flow duct (4) comes into contact with the thermostat (11), whereas the wall (1) has a curvature (20) around the perforation (6).

2. Thermostatic control valve according to Claim 1, **characterized in that** a flow guide element (12) is present in the perforation (6).

3. Thermostatic control valve according to Claims 1 and 2, **characterized in that** the flow guide element (12) is an obliquely standing wing (13) which is produced by forming and which constitutes part of the wall (1).

4. Thermostatic control valve according to Claims 1 and 2, **characterized in that** the flow guide element (12) is an individual part which is inserted in the perforation (6) of the wall (1) and fastened.

5. Thermostatic control valve according to one of the preceding claims, **characterized in that** the housing (10) has a compartment (14), into which the thermostat (11) projects and in which the medium to be temperature-controlled is in contact with the thermostat (11).

6. Thermostatic control valve according to one of the preceding claims, **characterized in that** the housing (10) has a chamber (15) which possesses a connection (16) for cooler other medium and another connection (17) for warmer other medium, the chamber (15) being connected hydraulically to the supply duct (2) for the other medium of the heat exchanger, and, depending on the position of the control valve, either only cooler or only warmer other medium or a mixed stream of cooler and warmer other medium flowing into the supply duct (2) via the chamber (15).

7. Thermostatic control valve according to one of the preceding claims, **characterized in that** the wall (1) projects beyond the circumference of the heat exchanger and in the projecting region has means (30) for the preferably elastic fastening of the heat exchanger:

8. Thermostatic control valve according to one of the preceding claims, **characterized in that** the flow duct, which is connected hydraulically to the housing compartment via the perforation (6) in the wall (1), is preferably the flow duct (4) adjacent to the wall (1).

## Revendications

1. Clapet de contrôle thermostatique avec un boîtier (10), qui est fixé à une paroi (1) d'un échangeur de chaleur, par exemple un échangeur de chaleur huile/eau, pour tempérer un fluide (par exemple de l'huile), dans lequel il coopère avec un canal d'arrivée (2) de l'autre fluide (par exemple du liquide de refroidissement) au moyen d'une ouverture (3) dans la paroi (1) de l'échangeur de chaleur, dans lequel la température du fluide à tempérer sert pour le réglage de la température de l'autre fluide entrant dans l'échangeur de chaleur, à l'intérieur d'une plage de réglage déterminée, dans lequel l'échangeur de chaleur présente des canaux d'écoulement séparés (4, 5) pour le fluide à tempérer et pour l'autre fluide, et dans lequel la paroi (1) présente d'autres ouvertures pour des canaux d'arrivée et/ou de départ, **caractérisé en ce que** la paroi (1) de l'échangeur de chaleur présente en un endroit librement choisi, indépendamment de la position des canaux, au moins un passage (6) par lequel une communication hydraulique entre un canal d'écoulement (4) et le clapet de contrôle thermostatique est disponible, de telle manière qu'un fluide à tempérer circulant dans le canal d'écoulement (4) vienne en contact avec le thermostat (11) ainsi que la paroi (1) présente une courbure (20) autour du passage (6).

2. Clapet de contrôle thermostatique selon la revendication 1, **caractérisé en ce qu'**il se trouve un élément de déviation d'écoulement (12) dans le passage (6).

3. Clapet de contrôle thermostatique selon les revendications 1 et 2, **caractérisé en ce que** l'élément de déviation d'écoulement (12) est une ailette oblique (13) fabriquée par une technique de déformation, qui représente une partie de la paroi (1).

4. Clapet de contrôle thermostatique selon les revendications 1 et 2, **caractérisé en ce que** l'élément de déviation d'écoulement (12) est une pièce insolée, qui est insérée et fixée dans le passage (6) de la paroi (1).

5. Clapet de contrôle thermostatique selon l'une quelconque des revendications précédentes, **caractérisé en ce que** le boîtier (10) présente un compartiment (14), dans lequel le thermostat (11) pénètre et dans lequel le fluide à tempérer est en contact avec le thermostat (11).

6. Clapet de contrôle thermostatique selon l'une quelconque des revendications précédentes, **caractérisé en ce que** le boîtier (10) présente une chambre (15), qui comporte un raccord (16) pour un autre fluide plus froid et un autre raccord (17) pour un autre fluide plus chaud, dans lequel la chambre (15) est en liaison hydraulique avec le canal d'arrivée (2) de l'autre fluide de l'échangeur de chaleur et dans lequel, selon la position du clapet de contrôle, soit uniquement de l'autre fluide plus froid soit uniquement de l'autre fluide plus chaud soit encore un courant mélangé d'autre fluide plus froid et d'autre fluide plus chaud s'écoule dans le canal d'arrivée (2) par la chambre (15).

7. Clapet de contrôle thermostatique selon l'une quelconque des revendications précédentes, **caractérisé en ce que** la paroi (1) dépasse la dimension de l'échangeur de chaleur et présente dans la partie en dépassement des moyens (30) pour la fixation de préférence élastique de l'échangeur de chaleur.

8. Clapet de contrôle thermostatique selon l'une quelconque des revendications précédentes, **caractérisé en ce que** le canal d'écoulement, qui est en liaison hydraulique avec le compartiment du boîtier par l'intermédiaire du passage (6) dans la paroi (1), est de préférence le canal d'écoulement (4) proche de la paroi (1).
